# FASCICULE DE BREVET EUROPEEN

(11) **EP 4 180 296 B1**
(45) Date de publication et mention de la délivrance du brevet: **02.04.2025**
(21) Numéro de dépôt: 22207635.8
(22) Date de dépôt: 15.11.2022
(51) Int. Cl.: B60W 50/08, B60W 50/14

(54) **PROCÉDÉ ET SYSTÈME DE GESTION D'UN SYSTÈME MULTI-MODES D'UN VÉHICULE AUTOMOBILE**
VERFAHREN UND SYSTEM ZUR VERWALTUNG EINES MULTIMODALEN SYSTEMS EINES KRAFTFAHRZEUGS
METHOD AND SYSTEM FOR MANAGING A MULTI-MODE SYSTEM OF A MOTOR VEHICLE

(30) Priorité: 16.11.2021 FR 2112101
(43) Date de publication de la demande: 17.05.2023
(73) Titulaire: Renault s.a.s, 92100 Boulogne Billancourt (FR)
(72) Inventeur: LE-HIR, Nathalie, 78084 Guyancourt Cedex (FR); LUCET, Noemie, 78084 Guyancourt Cedex (FR); MOZZO, Denis, 78084 Guyancourt Cedex (FR)

(56) Documents cités:
- EP-A1- 1 355 209
- DE-A1- 102004 040 829
- DE-A1- 102010 063 792
- DE-A1- 102012 018 290
- DE-A1- 102018 203 426

## Description

La présente invention concerne le domaine des systèmes multi-modes présents dans les véhicules automobiles.

Il est connu d'équiper un véhicule automobile des systèmes d'aide à la conduite permettant au conducteur de sélectionner un mode de conduite, tel que par exemple un mode de conduite normale, un mode de conduite sportive, un mode éco permettant de réduire la consommation énergétique du véhicule et/ou un mode automatique qui permet de passer d'un mode de conduite à un autre de manière autonome en fonction de paramètres extérieurs au véhicule.

On peut se référer par exemple au document DE102019001955 - A1 qui décrit un procédé de fonctionnement des modes de conduite d'un véhicule automobile de type autonome dans lequel le conducteur sélectionne un mode de conduite.

Les documents DE102018203426A et DE102012018290A décrivent également des procédés de gestion de systèmes multi-modes.

Certains constructeurs automobiles proposent également de modifier l'ambiance lumineuse et/ou le contenu multimédia en fonction du mode de conduite choisi.

Toutefois, l'ensemble des contributeurs à l'ambiance, c'est-à-dire l'ambiance lumineuse, l'ambiance sonore, les retours tactiles et le contenu multimédia à bord du véhicule doivent être cohérents avec le mode de conduite sélectionné par le conducteur.

Afin de garantir confort et sécurité aux passagers du véhicule, l'ensemble des paramètres extérieurs au véhicule, intérieurs au véhicule, le mode de conduite choisi par le conducteur, ainsi que son type d'expérience doivent être pris en compte.

Il est donc nécessaire de proposer une configuration de l'ensemble des modes de conduite possibles tout en restant cohérent avec l'environnement intérieur et extérieur au véhicule.

Il existe un besoin d'améliorer les systèmes de configuration des modes de conduite d'un véhicule automobile.

L'invention a pour objet un procédé de gestion d'un système multi-modes d'un véhicule automobile selon la revendication 1.

L'ensemble de ces paramètres intérieurs et extérieurs sont transmis via le réseau de communication CAN ou « control area network » en termes anglo-saxons.

Lors du procédé de gestion, on détermine les modes de conduite activables en fonction de l'ensemble des paramètres intérieurs et extérieurs au véhicule récupérés.

Ainsi, on filtre les modes de conduites qui ne sont pas compatibles avec l'environnement intérieur et extérieur au véhicule automobile et ainsi on propose au conducteur uniquement les modes de conduites permettant une conduite à la fois confortable et sécuritaire.

En effet, afin d'assurer la sécurité des passagers du véhicule, certains modes de conduite ne sont pas accessibles ou sont limités. Par exemple, le mode de conduite sportive n'est pas accessible la nuit, lorsque la visibilité est réduite, par temps de pluie, etc...

Le nombre de passagers à bord du véhicule est également pris en compte pour la sélection de ce mode de conduite sportive. Par exemple, une raideur des amortisseurs élevée n'est généralement pas souhaitée lorsqu'il y a plus de deux passagers dans le véhicule automobile. Dans ce cas, le mode de conduite sportive est autorisé mais la raideur des amortisseurs n'est pas modifiée.

Grace à l'invention, on peut filtrer les modes de conduite qui ne sont pas compatibles avec l'environnement intérieur et extérieur au véhicule automobile et ainsi proposer au conducteur uniquement les modes de conduite permettant une conduite à la fois confortable et sécuritaire et également proposer au conducteur des modes de conduite limités dans lesquels une partie des paramètres de conduite sont aptes à être configurés par le conducteur.

Par exemple, les paramètres de conduite comprennent : l'ambiance lumineuse du véhicule, le retour tactile (dans le siège, la pédale d'accélération, les amortisseurs du véhicule, la direction du volant), la réactivité du châssis (en mode quatre roues motrices), l'ambiance sonore (contenu audio, sonorité du moteur, retour sonore de l'interface homme-machine), la consigne de température intérieure au véhicule et le paramétrage des systèmes d'aide à la conduite.

Dans les modes de gestion automatique et semi-automatique, les expériences sonores en fonction du mode de conduite sont préalablement enregistrées dans le système du véhicule ou générées en direct par un algorithme.

Avantageusement, on détecte le mode de conduite choisi par le conducteur parmi les modes de conduite activables et, une fois que le conducteur a choisi le mode de conduite dans le cas du mode de gestion manuel, on ouvre une fenêtre de configuration afin de permettre au conducteur de configurer les paramètres de conduite disponibles pour le mode de conduite choisi.

Selon un second aspect, l'invention concerne un système de gestion d'un système multi-modes d'un véhicule automobile selon la revendication 5.

L'ensemble de ces paramètres intérieurs et extérieurs sont transmis via le réseau de communication CAN ou « control area network » en termes anglo-saxons.

Le système de gestion d'un système multi-modes comprend en outre un module de détermination des modes de conduite activables en fonction de l'ensemble des paramètres intérieurs et extérieurs au véhicule récupérés.

Ainsi, le module de détermination filtre les modes de conduite qui ne sont pas compatibles avec l'environnement intérieur et extérieur au véhicule automobile et ainsi propose au conducteur uniquement les modes de conduite permettant une conduite à la fois confortable et sécuritaire.

Avantageusement, le système comprend un module de détection du mode de conduite choisi par le conducteur parmi les modes de conduite activables et un module de configuration du mode de conduite configuré pour permettre au conducteur de configurer les paramètres de conduite disponibles pour le mode de conduite choisi.

Par exemple, les paramètres de conduite comprennent : l'ambiance lumineuse du véhicule, le retour tactile (dans le siège, la pédale d'accélération, les amortisseurs du véhicule, la direction du volant), la réactivité du châssis (en mode quatre roues motrices), l'ambiance sonore (contenu audio, sonorité du moteur, retour sonore de l'interface homme-machine), la consigne de température intérieure au véhicule et le paramétrage des systèmes d'aide à la conduite.

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] présente schématiquement le système de gestion d'un système multi-modes d'un véhicule automobile selon l'invention ; et
[Fig 2] illustre un organigramme d'un procédé de gestion d'un système multi-modes selon un mode de réalisation de l'invention mis en œuvre par le système de la figure 1.

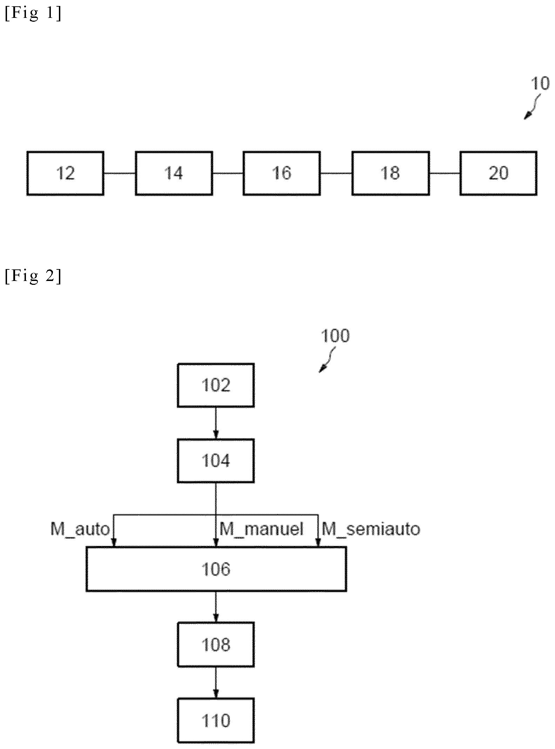

Sur la figure 1, on a représenté de manière très schématique un système 10 de gestion d'un système multi-modes d'un véhicule automobile.

Le système multi-modes agit sur plusieurs paramètres de conduite comprenant l'ambiance lumineuse du véhicule, le retour tactile (dans le siège, la pédale d'accélération, les amortisseurs du véhicule, la direction du volant), la réactivité du châssis (en mode quatre roues motrices), l'ambiance sonore (contenu audio, sonorité du moteur, retour sonore de l'interface homme-machine), la consigne de température intérieure au véhicule et le paramétrage des systèmes d'aide à la conduite.

Le système 10 de gestion du système multi-modes comprend un module 12 de détection de l'activation du véhicule automobile par le conducteur. Lorsque le module 12 de détection détecte l'allumage du véhicule, l'interface homme-machine (non représentée) du véhicule invite le conducteur à choisir selon un mode de gestion automatique ou un mode de gestion semi-automatique (manuel pour le contenu audio et automatique pour le reste des contributeurs) ou un mode de gestion manuel pour le choix de l'ensemble des contributeurs à l'ambiance, c'est-à-dire l'ambiance lumineuse et/ou l'ambiance sonore et/ou le contenu multimédia à bord du véhicule. Ainsi, le conducteur peut choisir entre le mode de gestion automatique M_auto dans lequel le véhicule propose automatiquement une expérience sonore en fonction du mode de conduite activé, le mode de gestion semi-automatique M_semiauto dans lequel le véhicule propose automatiquement une ambiance lumineuse alors que le contenu audio reste au choix de l'utilisateur et le mode de gestion manuel M_manuel dans lequel le conducteur reste maître du choix du contenu audio. Les expériences sonores en fonction du mode de conduite sont préalablement enregistrées dans le système du véhicule ou générées automatiquement en direct durant la conduite. Le choix du mode de gestion est pris en compte par un module 14 de détection du mode de gestion choisi.

Le système 10 de gestion du système multi-modes comprend en outre un module 16 d'acquisition ou récupération des paramètres extérieurs, tel que par exemple la visibilité extérieure fournie par des capteurs (non représentés), permettant de détecter du brouillard, de la pluie, de la neige, le moment de la journée (nuit/jour), etc., ainsi que le type de route (ville, montagne).

Le module 16 d'acquisition permet également d'acquérir des paramètres intérieurs au véhicule, tels que par exemple le nombre de passagers présents dans le véhicule, le temps de trajet effectué, les données sur l'humeur et la santé du conducteur fournies par des capteurs physionomiques et/ou caméra à l'intérieur du véhicule.

L'ensemble de ces paramètres intérieurs et extérieurs sont transmis via le réseau de communication CAN ou « control area network » en termes anglo-saxons.

Le système 10 de gestion du système multi-modes comprend en outre un module 18 de détermination des modes de conduite activables en fonction de l'ensemble des paramètres intérieurs et extérieurs au véhicule fournis par le module 16 d'acquisition.

Le mode de conduite peut être compris dans le groupe non limité comprenant le mode de conduite sportive, le mode de conduite confort, le mode éco, le mode de conduite neige, le mode de conduite à quatre roues motrices, le mode de conduite énergisant, et le mode automatique.

Le module 18 de détermination des modes de conduite activables permet de filtrer les modes de conduite qui ne sont pas compatibles avec l'environnement intérieur et extérieur au véhicule automobile et ainsi proposer au conducteur uniquement les modes de conduite permettant une conduite à la fois confortable et sécuritaire.

En effet, afin d'assurer la sécurité des passagers du véhicule, certains modes de conduite ne sont pas accessibles ou sont limités. Par exemple, le mode de conduite sportive n'est pas accessible la nuit, lorsque la visibilité est réduite, par temps de pluie, etc...

Le nombre de passagers à bord du véhicule est également pris en compte pour la sélection de ce mode de conduite sportive. Par exemple, une raideur des amortisseurs élevée n'est généralement pas souhaitée lorsqu'il y a plus de deux passagers dans le véhicule automobile. Dans ce cas, le mode de conduite sportive est autorisé mais la raideur des amortisseurs n'est pas modifiée.

Une fois que les modes de conduite activables sont déterminés par le module 18, l'interface homme-machine (non représentée) du véhicule invite le conducteur à choisir un mode de conduite parmi les modes de conduite activables. Le mode de conduite choisi est détecté par un module de détection (non représenté).

Une fois que le conducteur a choisi le mode de conduite, un module 20 de configuration du mode de conduite est configuré pour permettre au conducteur de configurer les paramètres de conduite disponibles pour le mode de conduite choisi.

Tel qu'illustré sur la figure 2, le procédé 100 de gestion d'un système multi-modes comprend une étape 102 de détection de l'activation du véhicule automobile par le conducteur. Lorsque l'allumage du véhicule est détecté, l'interface homme-machine (non représentée) du véhicule invite le conducteur à choisir selon un mode de gestion automatique, un mode de gestion semi-automatique, ou un mode de gestion manuel pour le choix de l'ensemble des contributeurs à l'ambiance, c'est-à-dire l'ambiance lumineuse et/ou l'ambiance sonore et/ou le contenu multimédia à bord du véhicule. Ainsi, le conducteur peut choisir entre le mode de gestion automatique M_auto dans lequel le véhicule propose automatiquement une expérience sonore en fonction du mode de conduite activé, le mode de gestion semi-automatique M_semiauto dans lequel le véhicule propose automatiquement une ambiance lumineuse alors que le contenu audio reste au choix de l'utilisateur, et un mode de gestion manuel M_manuel dans lequel le conducteur reste maître du choix du contenu audio. Les expériences sonores en fonction du mode de conduite sont préalablement enregistrées dans le système du véhicule ou générées automatiquement en direct durant la conduite. Le choix du mode de gestion est pris en compte à l'étape 104 de détermination du mode de gestion choisi.

Le procédé 100 de gestion d'un système multi-modes comprend en outre une étape 106 d'acquisition des paramètres extérieurs, tel que par exemple la visibilité extérieure fournie par des capteurs (non représentés), permettant de détecter du brouillard, de la pluie, de la neige, le moment de la journée (nuit/jour), etc., ainsi que le type de route (ville, montagne).

Lors de l'étape d'acquisition 106, on récupère également des paramètres intérieurs au véhicule, tels que par exemple le nombre de passagers présents dans le véhicule, le temps de trajet effectué, les données sur l'humeur et la santé du conducteur fournies par des capteurs physionomiques, physiologiques et/ou caméra à l'intérieur du véhicule.

L'ensemble de ces paramètres intérieurs et extérieurs sont transmis via le réseau de communication CAN ou « control area network » en termes anglo-saxons.

Le procédé 100 de gestion d'un système multi-modes comprend en outre une étape 108 de détermination des modes de conduite activables en fonction de l'ensemble des paramètres intérieurs et extérieurs au véhicule récupérés lors de l'étape d'acquisition 106.

Le mode de conduite peut être compris dans le groupe non limité comprenant le mode de conduite sportive, le mode de conduite confort, le mode éco, le mode de conduite neige, le mode de conduite à quatre roues motrices, le mode de conduite énergisant, et le mode automatique.

Lors de l'étape 108 de détermination des modes de conduite activables, on filtre les modes de conduites qui ne sont pas compatibles avec l'environnement intérieur et extérieur au véhicule automobile et ainsi proposer au conducteur uniquement les modes de conduites permettant une conduite à la fois confortable et sécuritaire.

En effet, afin d'assurer la sécurité des passagers du véhicule, certains modes de conduite ne sont pas accessibles ou sont limités. Par exemple, le mode de conduite sportive n'est pas accessible la nuit, lorsque la visibilité est réduite, par temps de pluie, etc...

Le nombre de passagers à bord du véhicule est également pris en compte pour la sélection de ce mode de conduite sportive. Par exemple, une raideur des amortisseurs élevée n'est pas souhaitée lorsqu'il y a plus de deux passagers dans le véhicule automobile. Dans ce cas, le mode de conduite sportive est autorisé mais la raideur des amortisseurs n'est pas modifiée.

Une fois que les modes de conduite activables sont déterminés, l'interface homme-machine (non représentée) du véhicule invite le conducteur à choisir un mode de conduite parmi ces modes de conduite activables.

Une fois que le conducteur a choisi le mode de conduite, on ouvre une fenêtre de configuration, à l'étape 110, afin de permettre au conducteur de configurer les paramètres de conduite disponibles pour le mode de conduite choisi.

Les paramètres de conduite comprennent : l'ambiance lumineuse du véhicule, le retour tactile (dans le siège, la pédale d'accélération, les amortisseurs du véhicule, la direction du volant), la réactivité du châssis (en mode quatre roues motrices), l'ambiance sonore (contenu audio, sonorité du moteur, retour sonore de l'interface homme-machine), la consigne de température intérieure au véhicule et le paramétrage des systèmes d'aide à la conduite.

Grace à l'invention, on peut filtrer les modes de conduites qui ne sont pas compatibles avec l'environnement intérieur et extérieur au véhicule automobile et ainsi proposer au conducteur uniquement les modes de conduites permettant une conduite à la fois confortable et sécuritaire et également proposer au conducteur des modes de conduite limités dans lesquels une partie des paramètres de conduite sont aptes à être configurés par le conducteur.

## Revendications

1. Procédé (100) de gestion d'un système multi-modes d'un véhicule automobile, dans lequel :
- on détecte le mode de gestion (M_auto, M_semiauto, M_manuel) de l'ensemble des contributeurs à l'ambiance à bord du véhicule choisi par le conducteur du véhicule ;
- on récupère des paramètres extérieurs compris dans le groupe comprenant au moins la visibilité extérieure, le moment de la journée, le type de route ;
- on récupère des paramètres intérieurs compris dans le groupe comprenant au moins le nombre de passagers présents dans le véhicule, le temps de trajet effectué, les données sur l'humeur et la santé du conducteur ;
- on détermine les modes de conduite activables compris dans le groupe non limité comprenant le mode de conduite sportive, le mode de conduite confort, le mode éco, le mode de conduite neige, le mode de conduite à quatre roues motrices, le mode de conduite énergisant, et le mode automatique en fonction de l'ensemble des paramètres intérieurs et extérieurs au véhicule récupérés, et
- on détecte le mode de conduite choisi par le conducteur parmi les modes de conduite activables,
le mode de gestion (M_auto, M_semiauto, M_manuel) de l'ensemble des contributeurs à l'ambiance à bord du véhicule étant choisi par le conducteur du véhicule entre un mode de gestion automatique (M_auto) dans lequel l'ensemble des contributeurs à l'ambiance à bord du véhicule sont déterminés automatiquement en fonction du mode de conduite choisi, un mode de gestion semi-automatique (M_semiauto) dans lequel l'ensemble des contributeurs à l'ambiance à bord du véhicule hormis le contenu audio sont déterminés automatiquement en fonction du mode de conduite choisi et un mode de gestion manuel (M_manuel) dans lequel l'ensemble des contributeurs à l'ambiance à bord du véhicule sont déterminés manuellement par le conducteur.

2. Procédé selon la revendication 1, dans lequel une fois que le conducteur a choisi le mode de conduite, on ouvre une fenêtre de configuration afin de permettre au conducteur de configurer les paramètres de conduite disponibles pour le mode de conduite choisi.

3. Procédé selon la revendication 2, dans lequel les paramètres de conduite comprennent : l'ambiance lumineuse du véhicule, le retour tactile dans le siège et/ou la pédale d'accélération et/ou les amortisseurs du véhicule et/ou la direction du volant, la réactivité du châssis en mode quatre roues motrices, l'ambiance sonore comprenant le contenu audio et/ou la sonorité du moteur et/ou le retour sonore de l'interface homme-machine, la consigne de température intérieure au véhicule et le paramétrage des systèmes d'aide à la conduite.

4. Procédé selon l'une quelconque des revendications précédentes, dans lequel le mode de conduite est compris dans le groupe comprenant au moins le mode de conduite sportive, le mode de conduite confort, le mode éco, le mode de conduite neige, le mode de conduite à quatre roues motrices, le mode de conduite énergisant, et le mode automatique.

5. Système (10) de gestion d'un système multi-modes d'un véhicule automobile, comprenant :
- un module (14) de détection du mode de gestion (M_auto, M_semiauto, M_manuel) de l'ensemble des contributeurs à l'ambiance à bord du véhicule choisi par le conducteur du véhicule ;
- un module (16) de récupération des paramètres extérieurs compris dans le groupe comprenant au moins la visibilité extérieure, le moment de la journée, le type de route et des paramètres intérieurs compris dans le groupe comprenant au moins le nombre de passagers présents dans le véhicule, le temps de trajet effectué, les données sur l'humeur et la santé du conducteur ;
- un module (18) de détermination des modes de conduite activables compris dans le groupe non limité comprenant le mode de conduite sportive, le mode de conduite confort, le mode éco, le mode de conduite neige, le mode de conduite à quatre roues motrices, le mode de conduite énergisant, et le mode automatique en fonction de l'ensemble des paramètres intérieurs et extérieurs au véhicule récupérés, et
- un module de détection du mode de conduite choisi par le conducteur parmi les modes de conduite activables, le mode de gestion (M_auto, M_semiauto, M_manuel) de l'ensemble des contributeurs à l'ambiance à bord du véhicule étant choisi par le conducteur du véhicule entre un mode de gestion automatique (M_auto) dans lequel l'ensemble des contributeurs à l'ambiance à bord du véhicule sont déterminés automatiquement en fonction du mode de conduite choisi, un mode de gestion semi-automatique (M_semiauto) dans lequel l'ensemble des contributeurs à l'ambiance à bord du véhicule hormis le contenu audio sont déterminés automatiquement en fonction du mode de conduite choisi et un mode de gestion manuel (M_manuel) dans lequel l'ensemble des contributeurs à l'ambiance à bord du véhicule sont déterminés manuellement par le conducteur.

6. Système selon la revendication 5, comprenant un module (20) de configuration du mode de conduite configuré pour permettre au conducteur de configurer les paramètres de conduite disponibles pour le mode de conduite choisi.

7. Système selon la revendication 6, dans lequel, les paramètres de conduite comprennent : l'ambiance lumineuse du véhicule, le retour tactile dans le siège et/ou la pédale d'accélération et/ou les amortisseurs du véhicule et/ou la direction du volant, la réactivité du châssis en mode quatre roues motrices, l'ambiance sonore comprenant le contenu audio et/ou la sonorité du moteur et/ou le retour sonore de l'interface homme-machine, la consigne de température intérieure au véhicule et le paramétrage des systèmes d'aide à la conduite.

## Patentansprüche

1. Verfahren (100) zur Verwaltung eines multimodalen Systems eines Kraftfahrzeugs, bei dem:
- der von dem Fahrer des Fahrzeugs gewählte Verwaltungsmodus (M_auto, M_semiauto, M_manuel) zur Verwaltung der Gesamtheit der zum Ambiente an Bord des Fahrzeugs beitragenden Faktoren detektiert wird;
- Außenparameter abgerufen werden, die in der Gruppe enthalten sind, die mindestens die äußere Sicht, den Zeitpunkt des Tages, die Straßenart umfasst;
- Innenparameter abgerufen werden, die in der Gruppe enthalten sind, die mindestens die Anzahl der in dem Fahrzeug anwesenden Insassen, die zurückgelegte Fahrzeit, die Daten zur Stimmung und Gesundheit des Fahrers umfasst;
- die aktivierbaren Fahrmodi, die in der nicht beschränkten Gruppe enthalten sind, die den Sport-Fahrmodus, den Komfort-Fahrmodus, den Eco-Modus, den Winter-Fahrmodus, den Allrad-Fahrmodus, den energetisierenden Fahrmodus und den Automatikmodus umfasst, in Abhängigkeit von der Gesamtheit der abgerufenen Innen- und Außenparameter des Fahrzeugs bestimmt werden, und
- der von dem Fahrer unter den aktivierbaren Fahrmodi gewählte Fahrmodus detektiert wird,
wobei der Verwaltungsmodus (M_auto, M_semiauto, M_manuel) zur Verwaltung der Gesamtheit der zum Ambiente an Bord des Fahrzeugs beitragenden Faktoren von dem Fahrer des Fahrzeugs unter einem automatischen Verwaltungsmodus (M_auto), in dem die Gesamtheit der zum Ambiente an Bord des Fahrzeugs beitragenden Faktoren in Abhängigkeit von dem gewählten Fahrmodus automatisch bestimmt wird, einem halbautomatischen Verwaltungsmodus (M_semiauto), in dem die Gesamtheit der zum Ambiente an Bord des Fahrzeugs beitragenden Faktoren mit Ausnahme des Audio-Inhalts in Abhängigkeit von dem gewählten Fahrmodus automatisch bestimmt wird, und einem manuellen Verwaltungsmodus (M_manuel), in dem die Gesamtheit der zum Ambiente an Bord des Fahrzeugs beitragenden Faktoren vom Fahrer manuell bestimmt wird, gewählt wird.

2. Verfahren nach Anspruch 1, bei dem, sobald der Fahrer den Fahrmodus gewählt hat, ein Konfigurationsfenster geöffnet wird, um dem Fahrer zu ermöglichen, die für den gewählten Fahrmodus verfügbaren Fahrparameter zu konfigurieren.

3. Verfahren nach Anspruch 2, bei dem die Fahrparameter umfassen: das Lichtambiente des Fahrzeugs, das taktile Feedback in dem Sitz und/oder dem Gaspedal und/oder den Dämpfern des Fahrzeugs und/oder der Lenkung des Lenkrads, die Reaktivität des Fahrgestells im Allradmodus, das akustische Ambiente, das den Audio-Inhalt und/oder den Klang des Motors und/oder das akustische Feedback der Mensch-Maschine-Schnittstelle umfasst, den Sollwert der Fahrzeuginnentemperatur und die Parametrierung der Fahrassistenzsysteme.

4. Verfahren nach einem der vorhergehenden Ansprüche, bei dem der Fahrmodus in der Gruppe enthalten ist, die mindestens den Sport-Fahrmodus, den Komfort-Fahrmodus, den Eco-Modus, den Winter-Fahrmodus, den Allrad-Fahrmodus, den energetisierenden Fahrmodus und den Automatikmodus umfasst.

5. System (10) zur Verwaltung eines multimodalen Systems eines Kraftfahrzeugs, umfassend:
- ein Modul (14) zur Detektion des von dem Fahrer des Fahrzeugs gewählten Verwaltungsmodus (M_auto, M_semiauto, M_manuel) zur Verwaltung der Gesamtheit der zum Ambiente an Bord des Fahrzeugs beitragenden Faktoren;
- ein Modul (16) zum Abrufen der Außenparameter, die in der Gruppe enthalten sind, die mindestens die äußere Sicht, den Zeitpunkt des Tages, die Straßenart umfasst, und der Innenparameter, die in der Gruppe enthalten sind, die mindestens die Anzahl der in dem Fahrzeug anwesenden Insassen, die zurückgelegte Fahrzeit, die Daten zur Stimmung und Gesundheit des Fahrers umfassen;
- ein Modul (18) zur Bestimmung der aktivierbaren Fahrmodi, die in der nicht beschränkten Gruppe enthalten sind, die den Sport-Fahrmodus, den Komfort-Fahrmodus, den Eco-Modus, den Winter-Fahrmodus, den Allrad-Fahrmodus, den energetisierenden Fahrmodus und den Automatikmodus umfasst, in Abhängigkeit von der Gesamtheit der abgerufenen Innen- und Außenparameter des Fahrzeugs, und
- ein Modul zur Detektion des von dem Fahrer unter den aktivierbaren Fahrmodi gewählten Fahrmodus, wobei der Verwaltungsmodus (M_auto, M_semiauto, M_manuel) zur Verwaltung der Gesamtheit der zum Ambiente an Bord des Fahrzeugs beitragenden Faktoren vom Fahrer des Fahrzeugs unter einem automatischen Verwaltungsmodus (M_auto), in dem die Gesamtheit der zum Ambiente an Bord des Fahrzeugs beitragenden Faktoren in Abhängigkeit von dem gewählten Fahrmodus automatisch bestimmt wird, einem halbautomatischen Verwaltungsmodus (M_semiauto), in dem die Gesamtheit der zum Ambiente an Bord des Fahrzeugs beitragenden Faktoren mit Ausnahme des Audio-Inhalts in Abhängigkeit von dem gewählten Fahrmodus automatisch bestimmt wird, und einem manuellen Verwaltungsmodus (M_manuel), in dem die Gesamtheit der zum Ambiente an Bord des Fahrzeugs beitragenden Faktoren vom Fahrer manuell bestimmt wird, gewählt wird.

6. System nach Anspruch 5, umfassend ein Modul (20) zur Konfiguration des Fahrmodus, das dazu konfiguriert ist, dem Fahrer zu ermöglichen, die für den gewählten Fahrmodus verfügbaren Fahrparameter zu konfigurieren.

7. System nach Anspruch 6, bei dem die Fahrparameter umfassen: das Lichtambiente des Fahrzeugs, das taktile Feedback in dem Sitz und/oder dem Gaspedal und/oder den Dämpfern des Fahrzeugs und/oder der Lenkung des Lenkrads, die Reaktivität des Fahrgestells im Allradmodus, das akustische Ambiente, das den Audio-Inhalt und/oder den Klang des Motors und/oder das akustische Feedback der Mensch-Maschine-Schnittstelle umfasst, den Sollwert der Fahrzeuginnentemperatur und die Parametrierung der Fahrassistenzsysteme.

## Claims

1. Method (100) for managing a multi-mode system of a motor vehicle, wherein:
- the management mode (M_auto, M_semiauto, M_manual) for all contributors to the vehicle on-board ambience chosen by the driver of the vehicle is detected;
- external parameters included in the group comprising at least external visibility, time of day, type of road are retrieved;
- internal parameters included in the group comprising at least the number of passengers present in the vehicle, the journey time, data regarding the mood and health of the driver are retrieved;
- the activatable driving modes included in the non-limiting group consisting of sports driving mode, comfort driving mode, eco mode, snow driving mode, four-wheel drive mode, stimulating driving mode and automatic mode, are determined on the basis of all the retrieved parameters, internal and external to the vehicle, and
- the driving mode chosen by the driver from among the activatable driving modes is detected,
the management mode (M_auto, M_semiauto, M_manual) for all contributors to the vehicle on-board ambience being chosen by the driver of the vehicle from between an automatic management mode (M_auto) in which all contributors to the vehicle on-board ambience are determined automatically according to the chosen driving mode, a semi-automatic management mode (M_semiauto) in which all contributors to the vehicle on-board ambience except for the audio content are determined automatically according to the chosen driving mode, and a manual management mode (M_manual) in which all contributors to the vehicle on-board ambience are determined manually by the driver.

2. Method according to Claim 1, wherein once the driver has selected the driving mode, a configuration window is opened to allow the driver to configure the driving parameters available for the chosen driving mode.

3. Method according to Claim 2, wherein the driving parameters comprise: the lighting ambience of the vehicle, the tactile feedback in the seat and/or the accelerator pedal and/or the shock absorbers of the vehicle and/or the steering wheel direction, the responsiveness of the chassis in four-wheel drive mode, the acoustic ambience including the audio content and/or the sound of the engine and/or the acoustic feedback from the human-machine interface, the temperature setpoint inside the vehicle and the setup of the driver assistance systems.

4. Method according to any one of the preceding claims, wherein the driving mode is included in the group comprising at least the sports driving mode, the comfort driving mode, the eco mode, the snow driving mode, the four-wheel drive mode, the stimulating driving mode, and the automatic mode.

5. System (10) for managing a multi-mode system of a motor vehicle, comprising:
- a module (14) for detecting the management mode (M_auto, M_semiauto, M_manual) for all contributors to the vehicle on-board ambience chosen by the driver of the vehicle;
- a module (16) for retrieving the external parameters included in the group comprising at least external visibility, time of day and type of road, and the internal parameters included in the group comprising at least the number of passengers present in the vehicle, journey time, and data regarding the mood and health of the driver;
- a module (18) for determining the activatable driving modes included in the non-limiting group consisting of sports driving mode, comfort driving mode, eco mode, snow driving mode, four-wheel drive mode, stimulating driving mode and automatic mode, on the basis of all the retrieved parameters, internal and external to the vehicle, and
- a module for detecting the driving mode chosen by the driver from among the activatable driving modes, the management mode (M_auto, M_semiauto, M_manual) for all contributors to the vehicle on-board ambience being chosen by the driver of the vehicle from between an automatic management mode (M_auto) in which all contributors to the vehicle on-board ambience are determined automatically according to the chosen driving mode, a semi-automatic management mode (M_semiauto) in which all contributors to the vehicle on-board ambience except for the audio content are determined automatically according to the chosen driving mode, and a manual management mode (M_manual) in which all contributors to the vehicle on-board ambience are determined manually by the driver.

6. System according to Claim 5, comprising a driving mode configuration module (20) configured to allow the driver to configure the driving parameters available for the selected driving mode.

7. System according to Claim 6, wherein the driving parameters comprise: the lighting ambience of the vehicle, the tactile feedback in the seat and/or the accelerator pedal and/or the shock absorbers of the vehicle and/or the steering wheel direction, the responsiveness of the chassis in four-wheel drive mode, the acoustic ambience including the audio content and/or the sound of the engine and/or the acoustic feedback from the human-machine interface, the temperature setpoint inside the vehicle and the setup of the driver assistance systems.
